# EUROPÄISCHE PATENTSCHRIFT

(11) **EP 0 610 478 B1**
(45) Veröffentlichungstag und Bekanntmachung des Hinweises auf die Patenterteilung: **05.03.1997**
(21) Anmeldenummer: 93918927.0
(22) Anmeldetag: 30.08.1993
(51) Int. Cl.: B03B 9/06, B09B 3/00, H01J 9/50

(54) **VERFAHREN ZUM ZERLEGEN VON ABGESCHLOSSENEN, SCHADSTOFFHALTIGEN GLASKÖRPERN IN RECYCLEBARE BESTANDTEILE**
PROCESS FOR BREAKING CLOSED GLASS BODIES CONTAINING POLLUTANTS DOWN INTO RECYCLABLE COMPONENTS
PROCEDE POUR LE FRACTIONNEMENT DE CORPS DE VERRE SCELLES CONTENANT DES SUBSTANCES NOCIVES EN CONSTITUANTS RECYCLABLES

(30) Priorität: 01.09.1992 DE 4229124
(43) Veröffentlichungstag der Anmeldung: 17.08.1994
(73) Patentinhaber: Lück, Harald, A-5020 Salzburg (AT)
(72) Erfinder: Lück, Harald, A-5020 Salzburg (AT)
(74) Vertreter: Goddar, Heinz J., Dr.
(86) Internationale Anmeldenummer: DE9300788
(87) Internationale Veröffentlichungsnummer: WO9405428

(56) Entgegenhaltungen:
- EP-A- 0 420 367
- DD-A- 224 323
- DE-A- 3 901 842
- DE-A- 4 030 732
- DE-A- 4 130 531
- US-A- 3 650 396
- AUFBEREITUNGS TECHNIK. Bd. 33, Nr. 8 , August 1992 , WIESBADEN DE Seiten 460 - 462 W. THÜMMEL: 'Einsatz von Mogensen Vibro-Stangensizer beim Altglasrecycling'

## Beschreibung

Die Erfindung betrifft ein Verfahren zum Zerlegen von abgeschlossenen, schadstoffhaltigen Glaskörpern, wie Bildröhren oder Gasentladungsrohre, in recyclebare Bestandteile nach dem Oberbegriff von Anspruch 1.

Das Recycling ist zu einem wichtigen Thema der heutigen Zeit geworden. Sowohl die Begrenztheit der Rohstoffe als auch die Umweltbelastung machen es notwendig, über die Wiederverwertbarkeit des von der Industriegesellschaft produzierten Abfalls nachzudenken.

Mit der Wiederaufbereitung von Papier und Glas wird man fast täglich konfrontiert. So ist es vielerorts selbstverständlich, unterschiedliche Mülltonnen für Papier, Glas und den restlichen Hausmüll zu haben. Der Erfolg dieser getrennten Müllerfassung spiegelt sich z.B. darin wider, daß schon heute jedes zweite Hohlglasgefäß aus Altglas gemacht wird.

Die Recycling-Anlagen stellen hohe Aziforderungen an das Qualitätsprofil der wiederzuverarbeitenden Materialien. Ein Hauptproblem ist dabei, den Abfall in verschiedene Komponenten zu zerlegen, d.h. den Müll in seine unterschiedlichen, recyclebaren Bestandteile aufzutrennen. Erfolgreich setzt man dieses Prinzip des Aufteilens in verschiedene Bestandteile zum Beispiel beim Abtrennen von Aluminiumdosen aus Hausmüll oder beim Abtrennen von Flaschenverschlüssen von Glasflaschen ein. Komplizierter wird die Lage jedoch bei Elektronikmüll, wie zum Beispiel bei Fernsehgeräten, Computermonitoren, Computerterminals und Bildschirmgeräten allgemein. Hierbei hat man verschiedene Glassorten, Metallsorten, Kunststoffe und Schadstoffe voneinander zu separieren. Dabei kann man entweder mit hohem Personalaufwand die verschiedenen Bestandteile per Hand abtrennen oder einfach den kompletten Elektronikmüll zerkleinern, woraufhin die Bestandteile allerdings nicht mehr verwendet werden können und somit zu einem Teil des Deponiemülls werden.

Die Entsorgung, sei es in Form einer Deponierung oder einer Wiederverarbeitung, von Abfällen unterliegt dabei dem Abfallgesetz. Insbesondere im Falle von schadstoffhaltigem Abfall sind die durch das Ahfallgesetz aufgestellten Anforderungen an Entsorgungsanlagen recht hoch. Jedoch sind bisher noch keine zufriedenstellenden Entsorgungsanlagen für abgeschlossene, schadstoffhaltige Glaskörper, nämlich hauptsächlich aus Glas bestehende, aber auch Schadstoffe, Metalle und Keramik aufweisende Körper, die gemäß dem Katalog der besonders überwachungsbedürftigen Abfälle unter einem Ahfallschlüssel subsummiert sind und Bildröhren, Gasentladungsrohre und dergleichen umfassen, bekannt.

Möchte man zum Beispiel die Bestandteile einer Bildröhre recyclen, so muß man die verschiedenen Bestandteile derselben, die sich aus schadstoffbelastetem Frontglas, bleihaltigem Konusglas, einem Metallband zum Einbauen in ein Gehäuse, einer Metallmaske sowie Metallknöpfen zum Arretieren der Masken bei Farb-Bildröhren zusammensetzen, voneinander trennen. Aufgrund der Kompliziertheit bzw. der großen Anzahl unterschiedlicher Materialien geschieht diese Aufteilung häufig manuell. Das geklebte Metallband wird als erstes entfernt; dann kann man das Konus- und Frontglas mit Hilfe einer Diamantscheibe anschneiden und durch Wärmeeinwirkung von der Bildröhre trennen; als nächstes werden die Maske und danach die Arretierungsknöpfe manuell oder automatisch entfernt; das Konusglas wird dann nicht weiter bearbeitet und kann aussortiert werden; und schließlich werden die Schadstoffe von den Frontglasinnenseiten entfernt. Die so abgetrennten Bestandteile können dann wieder in den wirtschaftlichen Kreislauf zurückgeführt werden.

Aus der DE 39 01 842 A1 ist beispielsweise solch ein Verfahren zur Trennung von Bildröhrenglas von Bildröhren und dessen Reinigung bekannt. Dabei werden das Metallband, nachdem es gelöst wurde, die Maske sowie die Arretierungsknöpfe magnetisch und das Konusglas mittels einer Trennscheibe, wie einer Diamantscheibe, von dem Frontglas abgetrennt. Anschließend wird die Leuchtschicht auf dem Frontglas und die Beschichtung des Konusglases z. B. mit Sand oder Wasser unter Hochdruck abgestrahlt.

Im Falle von Gasentladungsrohren, die die Strahlung von Entladungsplasmen gegebenenfalls in Zusammenarbeit mit Leuchtstoffen ausnutzen, ist es üblich, ein Zerlegungsverfahren zu verwenden, das dem für Bildröhren im wesentlichen gleicht. Hierbei werden die Metall- und Keramikbestandteile aufweisenden Enden eines Gasentladungsrohrs von dem entsprechenden Glasrohr mit Hilfe einer Diamantscheibe abgetrennt, wobei entweder das für das Entladungsplasma notwendige Gas abgepumpt oder in die Atmosphäre gelassen wird, oder, im Falle einer Quecksilberdampflampe, Quecksilber durch Aufstreuen eines Hg-bindenden Stoffes, wie Merkurisorb®, unschädlich gemacht wird und dann aus dem Glasrohr in einen Sammelbehälter herausgeschüttelt werden kann. Wenn eine Leuchtschicht auf der Innenseite des Glasrohrs angebracht ist, wird diese mittels Sand oder Wasser unter Hochdruck abgestrahlt, so daß dann die verschiedenen Bestandteile eines Gasentladungsrohres wieder in den wirtschaftlichen Kreislauf zurückgeführt werden können.

Schließlich ist aus der DE 40 30 732 A1 ein gattungsgemäßes Verfahren für Leuchtstofflampen bekannt, bei dem ein selektives Zerlegen der Leuchtstofflampen in ihre Bestandteile so verwirklicht wird, daß zuerst die Pumprohrer abgebrochen, dann die Sockel abgezogen und daraufhin die Lampenenden abgesprengt werden. Die verbleibenden Mittelrohre werden dann derart weiterbehandelt, daß zuerst darin befindliche Quecksilberperlen abgetrennt, dann die Mittelrohre in einem Brecher zerkleinert und die dabei entstehenden Scherben in einer rotierenden Siebtrommel durch einen intensiven Scheuereffekt von anhaftendem Leuchtstoff und damit adhäsiv verbundenem Quecksilberrest befreit werden, um dann einer Wiedereinschmelzung zugeführt werden zu können. Dieses Verfahren hat sich zwar grundsätzlich bewährt, ist jedoch aufgrund seiner selektiven Zerlegung sehr kosten- sowie zeitaufwendig.

Eine maschinelle Zerkleinerung von kompletten Bildröhren und/oder Gasentladungsrohren lieferte bisher hingegen stets einen aus den diversen Bestandteilen derselben bestehenden "Brei", der nicht wiederverwertbar ist. Insbesondere hinsichtlich einer Schadstoffentsorgung ist solch ein indifferenziertes Brei-Herstellen unzufriedenstellend.

Der Erfindung liegt daher die Aufgabe zugrunde, ein gattungsgemäßes Verfahren derart weiterzuentwickeln, daß es die Nachteile des Stands der Technik überwindet, d.h. insbesondere sowohl vollautomatisch als auch kontinuierlich und mit geringem Personalaufwand verwirklicht werden kann, wobei Wirtschaftlichkeit sowie ein geringer Energieverbrauch sichergestellt werden sollen. Um den hohen Anforderungen an Recycling-Anlagen zu entsprechen, soll das erfindungsgemäße Verfahren außerdem einen hohen Abscheidungswirkungsgrad gewährleisten.

Diese Aufgabe wird erfindungsgemäß durch eine Weiterentwicklung nach dem Kennzeichen von Anspruch 1 gelöst.

Ferner sind bevorzugte Ausführungsformen der Erfindung in den Ansprüchen 2 bis 15 beschrieben.

Der Erfindung liegt die überraschende Erkenntnis zugrunde, daß abgeschlossene, schadstoffhaltige Glaskörper in ihre verschiedenen recyclebaren Bestandteile zerlegbar sind, indem sie nach einer Zerkleinerung und einer Schadstoffabtrennung, sei es in Form einer mechanischen Abreibung von Leuchtschichten und/oder durch Ausheizen oder Binden von der Gasentladung dienendem Quecksilber, verschiedene Abtrenneinrichtungen durchlaufen, in denen nacheinander die unterschiedlichen Glassorten magnetische und nicht magnetische Metalle sowie Opakstoffe absepariert werden.

Weitere Merkmale und Vorteile der Erfindung ergeben sich aus der nachstehenden Beschreibung, in der zwei Ausführungsbeispiele der Erfindung anhand der schematischen Zeichnung im einzelnen erläutert werden. Dabei zeigen:
- Fig. 1: einen schematischen Aufbau einer erfindungsgemäßen Abtrennanlage für Bildröhren;
und
- Fig. 2: einen schematischen Aufbau einer Abtrennanlage gemäß der Erfindung, in welcher sowohl Bildröhren als auch Gasentladungsrohre in recyclebare Bestandteile zerlegbar sind.

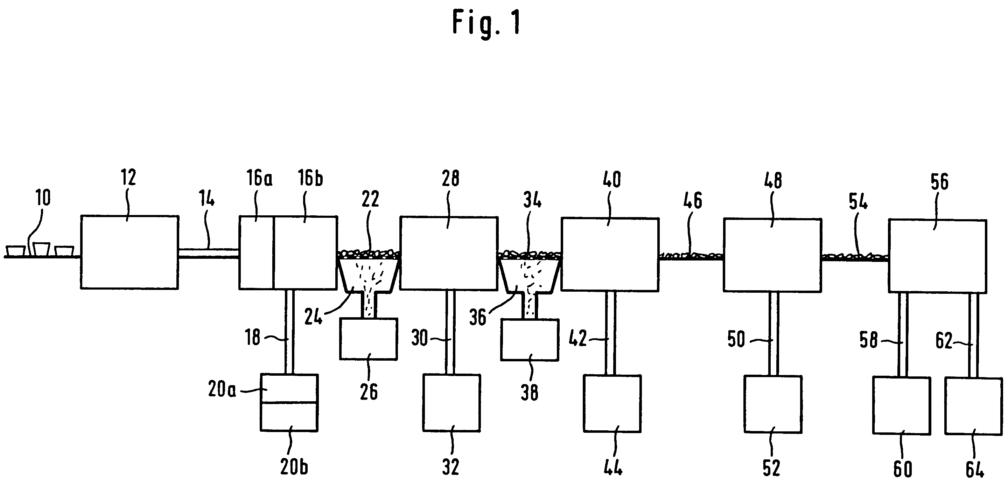

Bildröhren jeder Art, d. h. Schwarz-Weiß-Bildröhren sowie Farb-Bildröhren von unterschiedlicher Größe, werden einer in Fig. 1 dargestellten Abtrennanlage zugeführt, die ein Förderband 10, einen Schredder 12, ein Förderband 14, einen Zwischenspeicher 16a mit anschließender Trommel 16b, eine Leitung 18, eine Filteranlage 20a mit anschließendem Sammelbehälter 20b, ein Förderband 22, einen Trichter 24, einen Sammelbehälter 26, einen Abtrenner 28 für magnetische Metalle, eine Leitung 30, einen Sammelbehälter 32, ein Förderband 34, einen Trichter 36, einen Sammelbehälter 38, einen Frontglas-Abtrenner 40, eine Leitung 42, einen Sammelbehälter 44, ein Förderband 46, einen Abtrenner 48 für nicht magnetische Metalle, eine Leitung 50, einen Sammelbehälter 52, ein Förderband 54, einen Opakstoff-Abtrenner 56, eine Leitung 58, einen Sammelbehälter 60, eine Leitung 62 und einen Sammelbehälter 64 umfaßt.

Die vorstehend beschriebene Anlage für Bildröhren gewährleistet eine optimale Ausnutzung der Abtrenneinrichtungen 28, 40, 48 und 56 durch folgende Arbeitsweise:

Bildröhren werden über das vibrierende, den Materialfluß vergleichmäßigende Förderband 10 dem Schredder 12 zugeführt, wo eine Zerkleinerung der Bildröhren in bis zu handflächengroße Bruchstücke durch Brechen und Reißen stattfindet. Nach dem Schreddern wird das Material über ein Förderband 14, das innerhalb eines geschlossenen, keine Schadstoffe herauslassenden Verbindungsrohrs verläuft, zu dem Zwischenspeicher 16a geführt. Um einen gleichmäßigen Materialfluß zu gewährleisten, wird auch das Förderband 14 zu Vibrationen veranlaßt.

Die zerbrochenen Bildröhrenbestandteile werden in dem Zwischenspeicher 16a so lange angesammelt, bis eine optimale Füllung der Trommel 16b sichergestellt ist. In der sich drehenden Trommel 16b wird der Bruch umgewälzt und versetzt. Bei diesem Reibungsvorgang werden die Schadstoffbeschichtungen mechanisch von dem Glasbruch gelöst. Hierbei ist wichtig, daß die Oberflächen der diversen Bildröhrenbestandteile nicht derart beschädigt sind, daß sich Schadstoffe in Ritzen festsetzen können. Daher ist der Schredder 12 so eingestellt, daß die Oberflächenbeschädigung der Bestandteile möglichst klein gehalten wird. Der losgelöste Schadstoffstaub wird durch Druckluft in das Trommelinnere geblasen und dort mittels Unterdruck via Leitung 18 der Filteranlage 20a mit anschließendem Sammelbehälter 20b zugeführt. Hierbei werden die beim Schreddern entstandenen Kleinstteile aufgrund ihres höheren spezifischen Eigengewichts nicht mit den Schadstoffen zusammen angesaugt. Das ebenfalls vibrierende Förderband 22 transportiert dann die restlichen Bestandteile zu dem Abtrenner 28 für magnetische Metalle.

Auf dem Weg von der Trommel 16b zu dem Abtrenner 28 werden die restlichen Bildröhrenbestandteile von einem Teil besagter Kleinstteile dadurch befreit, daß in dem Förderband 22 kleine Löcher vorhanden sind, durch welche Kleinstteile fallen, die anschließend mit Hilfe eines Trichters 24 dem Sammelbehälter 26 zugeführt werden.

In dem Abtrenner 28 werden die magnetischen Metalle mit Hilfe von Magneten aus den verbleibenden Bildröhrenbestandteilen aussortiert und dann über die Leitung 30 dem Sammelbehälter 32 zugeführt. Der restliche Bruch wird daraufhin über das vibrierende Förderband 34, das gleichzeitig dem weiteren Aussieben von Kleinstteilen dient, indem dieselben durch die in dem Förderband 34 enthaltenen Löcher über den Trichter 36 in den Sammelbehälter 38 gelangen, zu dem Frontglas-Abtrenner 40 geführt.

In dem Trenner 40 gleitet der zu zerlegende, restliche Bildröhrenbruch über eine Rutsche zu einer Erkennungssensorik. Die Funktion dieser Sensoren beruht auf den unterschiedlichen optischen Eigenschaften von Konusglas, Frontglas und OPAK-Stoffen. Opakstoffe absorbieren das komplette Licht, während es beim Glasbruch mehrere Möglichkeiten gibt. Konusglas enthält Blei, ist auf einer Seite verspiegelt und auf der anderen Seite schwarz. Daher ist die Transmission des Infrarotlichts im Falle der Bestrahlung von Konusglas sehr gering. Jedoch existieren auch Bruchteile des Konusglases, die aufgrund einer zerkratzten Oberfläche eine beschädigte Beschichtung oder entlang von Bruchstellen keine Beschichtung mehr aufweisen. Mit Hilfe von Infrarotsensoren, also über die Absorption, Reflexion und/oder Transmission von Infrarotlicht, läßt sich jedoch das Konusglas von dem Frontglas solange unterscheiden, wie beim Zerkleinern die Oberflächen der Glassorten nicht zu sehr beschädigt worden sind. Dies liefert weitere Randbedingungen für die Zerkleinerungseinrichtung 12, wodurch indirekt die Größe der zerkleinerten Bestandteile der Bildröhren festgelegt wird. Von den optischen Erkennungssensoren werden bei Erkennung von Frontglas Signale an eine Steuerelektronik gegeben und dort verarbeitet. Die Elektronik gibt über ein Magnetventil einen Befehl an druckluftgespeiste Düsen, die nun gezielt das Frontglas über die Leitung 42 in den Sammelbehälter 44 blasen. Die verbleibenden, schadstoffbefreiten Bestandteile gelangen im Anschluß daran über das vibrierende Förderband 46 in den Abtrenner 48 für nicht magnetische Metalle.

In dem Abtrenner 48 sind Metalldetektoren installiert, die die im Scherbenstrom noch enthaltenen Metallteile, also die nicht magnetischen Metallteile, registrieren. Die von den Metalldetektoren ausgesandten Signale werden über einen Steuerkreis damit verbundenen Magnetventilen zugesandt, so daß zum richtigen Zeitpunkt ein Druckluftstrom auf ein erkanntes Metallteil trifft, der dieses aus dem Scherbenstrom herausbläst und über die Leitung 50 dem Sammelbehälter 52 zuführt. Die verbleibenden Bestandteile gelangen über das vibrierende Förderband 54 schließlich zum Opakstoff-Abtrenner 56.

Auch in dem Trenner 56 basiert die Aufteilung in OPAK-Stoffe und Konusglas auf der Messung optischer Eigenschaften, d.h. der Absorption, Transmission und/oder Reflexion von Infrarotlicht. Mit Hilfe der Sensorik werden wieder Düsen angesteuert, die dafür sorgen, daß Opakstoffe über die Leitung 58 in den Sammelbehälter 60 und Konusglas über die Leitung 62 in den Sammelbehälter 64 geblasen wird.

Die Sammelbehälter 20b, 26, 32, 38, 44, 52, 60 und 64 werden regelmäßig geleert, und die sorgfältig aufgeteilten Bildröhrenbestandteile können einer Weiter- bzw. Wiederverarbeitungsanlage zugeführt werden.

Der im Schredder entstandene Bruch weist eine Größe (LxBxH) von 20 bis 80mm x 20 bis 80mm x 2 bis 20mm auf.

In der Trommel 16b wird der Schadstoffanteil des Zn um 76% verringert und der des Cd um 85%, d. h. das Material ist praktisch schadstofffrei.

Der Magnet im Abtrenner 28 sorgt dafür, daß die im Sammelbehälter 32 landenden Teile im wesentlichen ausschließlich magnetische Metalle sind.
Der Frontglas-Abtrenner 40 arbeitet so, daß weniger als 6% anderer Bestandteile im Sammelbehälter 44 landet.

In dem Abtrenner 48 wird eine Glasmenge und/oder Opakstoffmenge von weniger als 1% von der die nicht magnetischen Metalle herausblasenden Druckluft mitgerissen.

Der OPAK-Stoff-Abtrenner 56 hat einen Abscheidungsgrad von über 90%.

Die Durchsatzleistung der mit Bezug auf Fig. 1 vorgestellten Abtrennanlage ist über zehn Tonnen pro Stunde, was die wirtschaftliche Bedeutung dieses vollautomatischen Verfahrens verdeutlicht.

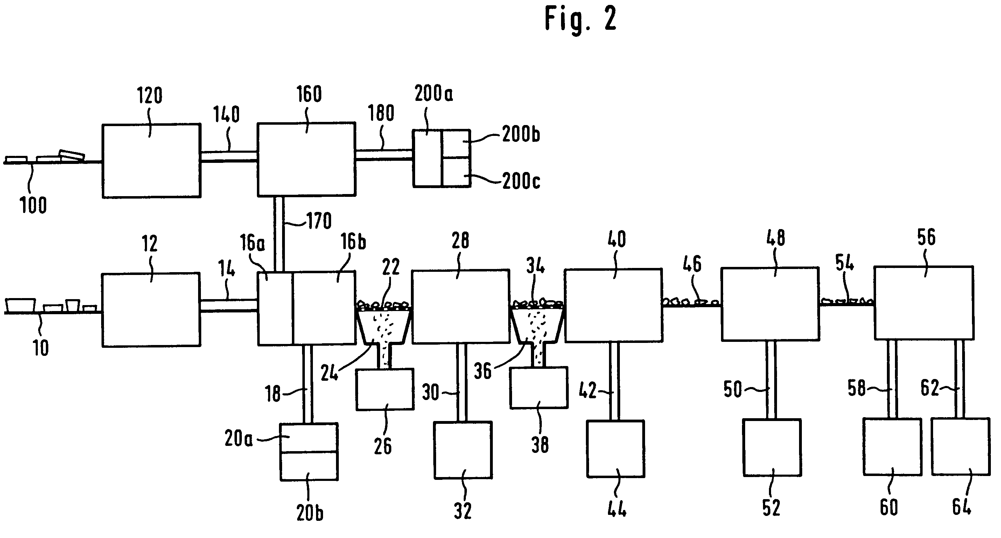

Die in Fig. 1 gezeigte Abtrennanlage für Bildröhren kann zu einer in Fig. 2 gezeigten Abtrennanlage für Bildröhren und Gasentladungsrohre durch Hinzufügen eines Förderbands 100, eines Schredders 120, eines Förderbands 140, einer Thermostrecke 160, eine Leitung 170, einer Leitung 180, eines Quecksilberkondensators 200a und zweier Sammelbehälter 200b und 200c erweitert werden.

In Analogie zu dem bereits mit Bezug auf Fig. 1 beschriebenen Verfahren ermöglicht die in Fig. 2 dargestellte Anlage ein Zerlegen von Gasentladungsrohren in recyclebare Bestandteile.

Dabei werden zusätzlich die folgenden Arbeitsschritte durchgeführt:

Gasentladungsrohre jeglicher Art, wie sie in Quecksilberdampflampen, Leuchtstofflampen oder dergleichen Verwendung finden, werden über das Förderband 100, das zwecks Materialflußvergleichmäßigung zu Vibrationen veranlaßt wird, zu dem Schredder 120 geführt, in welchem die Gasentladungsrohre in bis zu handflächengroße Bruchstücke zerkleinert werden. Von dem Schredder 120 wird der Gasentladungsrohrbruch über das Förderband 140, das in einem geschlossenen Verbindungsrohr verläuft, so daß keine Schadstoffe in die Atmosphäre austreten können, zu der die Thermostrecke 160 umfassenden Schadstoffabtrenneinrichtung geführt. An dem das Förderband 140 führenden Verbindungsrohr wird dabei gleichzeitig gepumpt, um die beim Öffnen der Gasentladungsrohre entweichenden Gase aus dem Schredder 120 zu der die Thermostrecke 160 enthaltenden Schadstoffabtrenneinrichtung zu führen.

Im nächsten Schritt wird der Bruch der Gasentladungsrohre entlang der Themostrecke 160 derart aufgeheizt, daß das gegebenenfalls im Bruch enthaltene Quecksilber verdampft wird. Der Quecksilberdampf und/oder weitere Gase, die in den Gasentladungsrohren der Plasmabildung dienten, werden sodann zum Quecksilberkondensator 200a abgepumpt. Dort findet mittels Kühlfallen eine Separation des Quecksilbers, das dann dem Sammelbehälter 200b zugeführt wird, von den restlichen Gasen, die dem Sammelbehälter 200c zugeführt werden, statt.

Der somit von Quecksilber und/oder anderen ehemals der Gasentladung dienenden Gasen befreite Gasentladungsrohrbruch wird im nächsten Schritt über die Leitung 170 dem Zwischenspeicher 16a und somit der bereits mit Bezug auf Fig. 1 beschriebenen Abtrennanlage zugeführt.

Die weiteren Zerlegungsschritte für den verbleibenden Gasentladungsrohrbruch entsprechen im wesentlichen denen im Falle der Zerlegung von Bildröhren beschriebenen Arbeitsschritten:

Schadstoffhaltige Beschichtungen der Gasentladungsrohre werden somit in der Trommel 16b abgetrennt, und der Abtrenner 28 dient dem Abtrennen magnetischer Metalle, während zwischen der Trommel 16b und dem Abtrenner 28 Kleinstteile ausgesiebt werden. Im Frontglas-Abtrenner 40 wird dann das komplette Glas der Gasentladungsrohre abgetrennt, um dem Sammelbehälter 44 zugeführt zu werden. Das Frontglas der Bildröhren ist nämlich gemeinsam mit dem Glas der Gasentladungsrohre wiederverwertbar. Zwischen den Abtrennern 28 und 40 findet wieder ein Aussieben von Kleinstteilen statt.

Der Abtrenner 48 sorgt anschließend, wie mit Bezug auf Fig. 1 beschrieben, für ein Abtrennen aller nicht magnetischen Metalle.

Da Gasentladungsrohre keine dem Frontglas von Bildröhren entsprechenden Bestandteile aufweisen, werden alle den OPAK-Stoff-Abtrenner 56 erreichenden Bruchteile über die Leitung 58 dem Sammelbehälter 60 zugeführt, ohne daß irgendwelche Materialien über die Leitung 62 in den Sammelbehälter 64 im Falle der Zerlegung von Gasentladungsrohren landen.

Es können gleichzeitig Bildröhren, die der in Fig. 2 dargestellten Anlage über das Förderband 10 zugeführt werden, und über das Förderband 100 zugeführte Gasentladungsrohre gemäß dem Verfahren der Erfindung in recyclebare Bestandteile zerlegt werden. Dabei sorgt der Zwischenspeicher 16a für einen konstanten Materialfluß in der Abtrennanlage.

Auch bei der in Fig. 2 dargestellten Anlage werden die Sammelbehälter 20b, 26, 32, 38, 44, 52, 60, 64, 200b und 200c in regelmäßigen Abständen geleert und die entsprechenden Bestandteile Recycling-Anlagen zugeführt.

Die Leistung der in Fig. 2 gezeigten Anlage entspricht sinngemäß der der in Fig. 1 dargestellten Abtrennanlage. Zusätzlich ist zu erwähnen, daß die Thermostrecke 160 im wesentlichen ein komplettes Abtrennen von Quecksilber ermöglicht.

### BEZUGSZEICHENLISTE

- 10: Förderband
- 12: Schredder
- 14: Förderband
- 16a: Zwischenspeicher
- 16b: Trommel
- 18: Leitung
- 20a: Filteranlage
- 20b: Sammelbehälter
- 22: Förderband mit kleinen Löchern
- 24: Trichter
- 26: Sammelbehälter
- 28: Abtrenner für magnetische Metalle
- 30: Leitung
- 32: Sammelbehälter
- 34: Förderband mit kleinen Löchern
- 36: Trichter
- 38: Sammelbehälter
- 40: Frontglas-Abtrenner
- 42: Leitung
- 44: Sammelbehälter
- 46: Förderband
- 48: Abtrenner für nicht magnetische Metalle
- 50: Leitung
- 52: Sammelbehälter
- 54: Förderband
- 56: Opakstoff-Abtrenner
- 58: Leitung
- 60: Sammelbehälter
- 62: Leitung
- 64: Sammelbehälter
- 100: Förderband
- 120: Schredder
- 140: Förderband
- 160: Thermostrecke
- 170: Leitung
- 180: Leitung
- 200a: Quecksilberkondensator
- 200b: Sammelbehälter
- 200c: Sammelbehälter

## Patentansprüche

1. Verfahren zum Zerlegen von abgeschlossenen, schadstoffhaltigen, Metallbestandteile und Glaskörper aufweisenden Verbundkörpern, wie Bildröhren oder Gasentladungsrohre, in recyclebare Bestandteile, bei dem die Glaskörper in einer Zerkleinerungseinrichtung (12, 120) zerlegt und anschließend in einer Schadstoffabtrenneinrichtung (16a, 16b, 160) im wesentlichen alle Schadstoffe vom Glaskörperbruch entfernt werden, wobei in entsprechenden Abtrenneinrichtungen (28, 48, 56, 40) ein Abtrennen von magnetischen Metallen, ggf. eine Separation von nicht magnetischen Metallen, ggf. eine Aussortierung von Opakstoffen, wie Keramik-, Tonscherben-, Stein- und/oder Porzellan-Anteile, sowie ein Abtrennen der verschiedenen Glassorten, wie Front- und Konusglas von Bildröhren und Glas von Gasentladungsrohren, erfolgt, dadurch gekennzeichnet, daß die kompletten Verbundkörper zuerst in bis zu handflächengroße Stücke, im wesentlichen ohne Verlust ihrer Oberflächeneigenschaften, zerlegt werden; daß dann zumindest der beim Zerlegen der Glaskörper freigesetzte und/oder losgelöste Teil der Schadstoffe vom Glasbruch und von den restlichen Anteilen abgetrennt wird; daß anschließend die aus dem Glasbruch und den restlichen Anteilen bestehende Mischung von Kleinstteilen befreit wird; daß dann die magnetischen Metalle aussortiert werden; daß dann das Frontglas von Bildröhren und/oder das Glas von Gasentladungsrohren aus dem Bruch entfernt wird; daß anschließend die nicht magnetischen Metalle, sofern vorhanden, abgetrennt werden; und daß schließlich die restlichen Glasbestandteile, soweit vorhanden, von den Opakstoffen abgetrennt werden, wobei ein Abtrenner (28) für die magnetischen Metalle, ein Glas-Abtrenner (40) für Frontglas von Bildröhren und/oder Glas von Gasentladungsröhren, ein Abtrenner (48) für nicht-magnetische Metalle und/oder ein Opakstoff-Abtrenner (56) jeweils mit mindestens einer Sende- und Empfangseinheit für Infrarotlicht, die das Absorptions-, Transmissions- und/oder Reflexionsvermögen der unterschiedlichen, von Schadstoffen befreiten Glaskörperbestandteile zum Selektieren ausnutzt, verwendet wird.

2. Verfahren nach Anspruch 1, dadurch gekennzeichnet, daß die Schadstoffabtrenneinrichtung (16a, 16b, 160) eine Schadstoffabtrennkammer (16b) umfaßt, in welcher Schadstoffbeschichtungen durch Aneinanderreiben der zerkleinerten Glaskörperbestandteile gelöst werden, daß der beim Zerlegen und/oder Aneinanderreiben losgelöste Teil der Schadstoffbeschichtungen über eine Leitung (18) zu einer ersten Filteranlage (20a) mit einem anschließenden ersten Sammelbehälter (20b) geführt wird, und/oder daß Gase, die beim Zerlegen der Glaskörper freigesetzt werden, aus der Zerkleinerungseinrichtung (160) abgepumpt und einem zweiten Sammelbehälter (200c) zugeführt werden.

3. Verfahren nach Anspruch 2, dadurch gekennzeichnet, daß die losgelösten Schadstoffe mittels Unterdruck von der Zerkleinerungseinrichtung (12, 120) und/oder der Schadstoffabtrennkammer (16a, 16b, 160) zur ersten Filteranlage (20a) geführt werden, und/oder daß das Entfernen der losgelösten Schadstoffe von den restlichen Bestandteilen unter Ausnutzung der unterschiedlichen spezifischen Gewichte der Schadstoffe im Vergleich zu den restlichen Bestandteilen durch den Einsatz einer ersten Zentrifuge (16b) unterstützt wird, und/oder daß das Loslösen von Schadstoffbeschichtungen vom Glasbruch den Einsatz einer Hilfssubstanz umfaßt, die nach der Schadstoffablösung die losgelösten Schadstoffe über eine Leitung zur ersten Filteranlage führt, wobei die Hilfssubstanz in der ersten Filteranlage von den Schadstoffen befreit und gereinigt wieder der Schadstoffabtrennkammer zugeführt wird, während die Schadstoffe in dem ersten Sammelbehälter zurückbleiben.

4. Verfahren nach Anspruch 3, dadurch gekennzeichnet, daß als Hilfssubstanz eine in bezug auf die Schadstoffbeschichtungen inerte Hilfssubstanz, wie eine nicht-fluidische Festsubstanz, wie Zellwolle, Sand oder dergleichen, eine inerte Flüssigkeit, wie Wasser, oder inertes Glas, wie Luft, verwendet wird.

5. Verfahren nach Anspruch 3 oder 4, dadurch gekennzeichnet, daß in der Schadstoffabtrennkammer mindestens eine erste Düse installiert wird, die ein Aufspritzen der Hilfssubstanz auf die zerkleinerten Glaskörperbestandteile und/oder die Entstehung von Hilfssubstanzwirbeln zum Unterstützen des Abtrennvorgangs bewirkt.

6. Verfahren nach einem der Ansprüche 3 bis 5, dadurch gekennzeichnet, daß die zerkleinerten Glaskörperbestandteile nach der durch den Kontakt mit der Hilfssubstanz bewirkten Befreiung von den Schadstoffbeschichtungen wieder aus derselben herausbefördert werden, und/oder daß die die losgelösten Schadstoffbeschichtungen tragende Hilfssubstanz aufgrund ihres in bezug auf die restlichen Bruchbestandteile unterschiedlichen spezifischen Gewichts von denselben in einer zweiten Zentrifuge getrennt wird, und/oder daß die Hilfssubstanz samt losgelösten Schadstoffbeschichtungen mittels Unterdruck zur ersten Filteranlage geführt wird.

7. Verfahren nach einem der vorangegangenen Ansprüche, dadurch gekennzeichnet, daß im Falle des Zerlegens von quecksilberhaltigen Glaskörpern die Zerkleinerungseinrichtung (120) so abgekühlt wird, daß im wesentlichen kein Quecksilberdampf freigesetzt wird, und/oder daß die Schadstoffabtrenneinrichtung (16a, 16b, 160) eine Thermostrecke (160) umfaßt, in welcher flüssiges Quecksilber verdampft wird, und Quecksilberdampf aus der Zerkleinerungseinrichtung (120) und/oder der Schadstoffabtrenneinrichtung (160) abgepumpt und über einen Quecksilberkondensator einem dritten Sammelbehälter (200b) zugeführt wird.

8. Verfahren nach einem der vorangegangenen Ansprüche, dadurch gekennzeichnet, daß die Schadstoffabtrenneinrichtung eine Quecksilberabtrennkammer umfaßt, in welcher Quecksilber mit Hilfe eines Hg-bindenden Zusatzstoffes durch Salzbildung, Komplexbildung und/oder Absorption unschädlich gemacht und zu einer zweiten Filteranlage geführt wird, daß der Zusatzstoff in der zweiten Filteranlage von dem Quecksilber befreit wird, und daß der gereinigte Zusatzstoff wieder der Quecksilberabtrennkammer zugeführt wird, während das Quecksilber zu einem dritten Sammelbehälter geführt wird.

9. Verfahren nach Anspruch 8, dadurch gekennzeichnet, daß der Zusatzstoff mittels mindestens einer zweiten Düse auf den Glaskörperbruch gespritzt wird, und/oder daß die zerkleinerten Glaskörperbestandteile durch den Zusatzstoff hindurch geführt werden, und/oder daß der Zusatzstoff samt Quecksilber mittels einer dritten Zentrifuge aufgrund seines spezifischen Gewichtes vom restlichen Glaskörperbruch getrennt wird.

10. Verfahren nach einem der vorangegangenen Ansprüche, dadurch gekennzeichnet, daß der Abtrenner (28) für magnetische Metalle mindestens einen Mangeten umfaßt, und/oder daß der Abtrenner für magnetische Metalle und/oder der Abtrenner für nicht magnetische Metalle die unterschiedliche elektrostatische Aufladung der zerkleinerten Verbundkörperbestandteile ausnutzt, und/oder daß der Abtrenner für magnetische Metalle (28) und/oder der Abtrenner (48) für nicht magnetische Metalle mindestens einen Metallsensor umfaßt, und/oder daß im OPAK-Stoff-Abtrenner (56) mindestens ein Keramiksensor eingesetzt wird.

11. Verfahren nach einem der vorangegangenen Ansprüche, dadurch gekennzeichnet, daß Förderbänder (22, 34, 46, 54, 100, 140), die den Transport zwischen den verschiedenen Abtrenneinrichtungen ermöglichen, mit Vibratoren ausgerüstet werden.

12. Verfahren nach einem der vorangegangenen Ansprüche, dadurch gekennzeichnet, daß die beim Zerkleinern der Verbundkörper entstandenen Kleinstteile aus den restlichen Bruchstücken herausgesiebt und jeweils mit Hilfe eines Trichters (24, 36) oder desgleichen zu mindestens einem vierten Sammelbehälter (26, 38) geführt werden.

13. Verfahren nach Anspruch 12, dadurch gekennzeichnet, daß das Heraussieben in mindestens einer zu durchlaufenden Trommel mittels Außenwandbohrungen derselben geschieht, und/oder daß das Heraussieben von Kleinstteilen während des Transports zwischen mindestens zwei verschiedenen Abtrenneinrichtungen mittels in dem entsprechenden, vibrierenden, transportführenden Förderband (22, 34) vorhandener Löcher geschieht.

14. Verfahren nach einem der vorangegangenen Ansprüche, dadurch gekennzeichnet, daß die Zerkleinerungseinrichtung (12, 120) durch einen ersten Zerkleinerer (12) für Bildröhren und/oder einen zweiten Zerkleinerer (120) für Gasentladungsrohre gebildet wird, wobei der erste Zerkleinerer (12) und/oder der zweite Zerkleinerer (120) einen Schredder umfaßt.

15. Verfahren nach einem der vorangegangenen Ansprüche, dadurch gekennzeichnet, daß nach dem Zerkleinern der Gasentladungsrohre sowie dem Entfernen des in ihnen enthaltenen Quecksilbers und der Zerkleinerung der Bildröhren oder nach der Schadstoffabtrennung die verbleibenden Bildröhrenbestandteile und die verbleibenden Gasentladungsrohrbestandteile zusammen weiterverarbeitet werden, wobei das Glas der Gasentladungsrohre mit dem Frontglas der Bildröhren zusammen abgetrennt wird.

## Claims

1. A process for breaking down closed composite elements, such as cathode ray tubes or gas discharge tubes, which contain pollutants and which comprise metal constituents and glass components, into recyclable components, in which the glass elements are broken down in a crusher (12, 120) and then substantially all the pollutants are removed from the broken glass elements in a pollutant separator (16a, 16b, 160), appropriate separators (28, 48, 56, 40) effecting separation of magnetic metals and where applicable separation of non-magnetic metals and where applicable sorting out of opaque substances, such as ceramic, clay fragment, stone and/or porcelain components, and separation of the different glass types, such as the front and cone glass of cathode ray tubes and glass of gas discharge tubes, characterised in that the complete composite elements are first broken down into pieces of the size of the hand, substantially without loss of their surface properties; in that at least that part of the pollutants which has been released and/or liberated on the breaking down of the glass elements is separated from the broken glass and from the remaining components; in that subsequently the mixture consisting of the broken glass and the remaining components has the extremely small pieces removed; in that the magnetic metals are then sorted out; in that the front glass of cathode ray tubes and/or the glass of gas discharge tubes is then removed from the broken material; in that the non-magnetic metals, where present, are then separated; and in that finally the remaining glass constituents, where present, are separated from the opaque substances, use being made of a separator (28) for the magnetic metals, a glass separator (40) for front glass of cathode ray tubes and/or glass of gas discharge tubes, a separator (48) for non-magnetic metals and/or an opaque substance separator (56) respectively with at least one transmission and receiving unit for infrared light, which unit for selection purposes utilises the absorption, transmission and/or reflection power of the different glass element constituents from which the pollutants have been removed.

2. A process according to claim 1, characterised in that the pollutant separator (16a, 16b, 160) comprises a pollutant separating chamber (16b) in which pollutant coatings are released by rubbing together the crushed glass element constituents, in that that part of the pollutant coatings which is released during the breaking-down and/or rubbing operation is fed via a line (18) to a first filter plant (20a) followed by a first reservoir (20b) and/or in that gases liberated on the breaking down of the glass elements are pumped out of the crusher (160) and fed to a second reservoir (200c).

3. A process according to claim 2, characterised in that the released pollutants are fed to the first filter plant (20a) by negative pressure from the crusher (12, 120) and/or the pollutant separating chamber (16a, 16b, 160) and/or in that the removal of the released pollutants from the remaining constituents is backed up by the use of a first centrifuge (16b) utilising the different specific gravities of the pollutants in comparison with the remaining constituents, and/or in that the release of pollutant coatings from the broken glass includes the use of an auxiliary substance which, after detachment of the pollutants, carries the released pollutants to the first filter plant via a line, the auxiliary substance which has the pollutants removed and has been purified in the first filter plant being re-fed to the pollutant separating chamber, while the pollutants remain in the first reservoir.

4. A process according to claim 3, characterised in that the auxiliary substance used is an auxiliary substance which is inert with respect to the pollutant coatings, such as a non-fluid solid substance, such as staple fibre, sand or the like, an inert liquid, such as water, or an inert gas, such as air.

5. A process according to claim 3 or 4, characterised in that at least one first nozzle is installed in the pollutant separating chamber and sprays the auxiliary substance on to the crushed glass element constituents and/or causes fluidisation of the auxiliary substance to back up the separating operation.

6. A process according to any one of claims 3 to 5, characterised in that after the pollutant coatings have been removed from the crushed glass element constituents by contact with the auxiliary substance the crushed glass element constituents are again conveyed out of the same and/or in that the auxiliary substance carrying the released pollutant coatings is separated in a second centrifuge from the remaining broken constituents on the basis of its specific gravity differing from the remaining broken constituents, and/or in that the auxiliary substance together with released pollutant coatings is fed by negative pressure to the first filter plant.

7. A process according to any one of the preceding claims, characterised in that where the glass articles broken down contain mercury the crusher (120) is so cooled that substantially no mercury vapour is released and/or in that the pollutant separator (16a, 16b, 160) comprises a thermo-zone (160) in which liquid mercury is vaporised and mercury vapour is pumped out of the crusher (120) and/or the pollutant separator (160) and fed via a mercury condenser to a third reservoir (200b).

8. A process according to any one of the preceding claims, characterised in that the pollutant separator comprises a mercury separating chamber in which mercury is rendered harmless by means of an Hg-binding additive by salt formation, complexing and/or absorption and is fed to a second filter plant, in that the additive in the second filter plant has the mercury removed therefrom and in that the purified additive is returned to the mercury separating chamber while the mercury is fed to a third reservoir.

9. A process according to claim 8, characterised in that the additive is sprayed on to the broken glass elements by means of at least one second nozzle and/or in that the crushed glass element constituents are passed through the additive and/or in that the additive together with the mercury is separated from the remaining broken glass elements by means of a third centrifuge on the basis of its specific gravity.

10. A process according to any one of the preceding claims, characterised in that the separator (28) for magnetic metals comprises at least one magnet and/or in that the separator for magnetic metals and/or the separator for non-magnetic metals utilises the different electrostatic charge of the crushed composite element constituents and/or in that the separator for magnetic metals (28) and/or the separator (48) for non-magnetic metals comprises at least one metal sensor and/or in that at least one ceramic sensor is used in the opaque substance separator (56).

11. A process according to any one of the preceding claims, characterised in that conveyor belts (22, 34, 46, 54, 100, 140) which provide transport between the different separators are equipped with vibrators.

12. A process according to any one of the preceding claims, characterised in that the extremely small parts formed during crushing of the composite elements are screened out of the remaining broken pieces and respectively fed to at least a fourth reservoir (26, 38) by means of a hopper (24, 36) or the like.

13. A process according to claim 12, characterised in that the screening out is effected in at least one drum through which the material has to pass, by means of outer wall boreholes, and/or in that the screening out of extremely small pieces is effected during the transport between at least two different separators by means of holes provided in the corresponding vibrating transporting conveyor belt (22, 34).

14. A process according to any one of the preceding claims, characterised in that the crusher (12, 120) is formed by a first crusher (12) for cathode ray tubes and/or a second crusher (120) for gas discharge tubes, the first crusher (12) and/or the second crusher (120) comprising a shredder.

15. A process according to any one of the preceding claims, characterised in that after the crushing of the gas discharge tubes and after removal of the mercury contained therein and after crushing of the cathode ray tubes or after the pollutant separation the remaining cathode ray tube constituents and the remaining gas discharge tube constituents are processed together, the glass of the gas discharge tubes being separated together with the front glass of the cathode ray tubes.

## Revendications

1. Procédé pour le fractionnement de corps composites scellés, contenant des substances nocives et comportant des corps en verre et des composants métalliques, tels que des tubes-images ou des tubes à décharge de gaz, en composants recyclables, dans lequel les corps en verre sont fragmentés dans un dispositif de fragmentation (12, 120), et ensuite pratiquement toutes les substances nocives sont éliminées des fragments de corps en verre dans un dispositif de séparation de substances nocives (16a, 16b, 160), une séparation des métaux magnétiques, éventuellement une séparation des métaux non magnétiques, éventuellement un triage de substances opaques, telles que des fractions de céramique, de tessons de terre cuite, de pierre et/ou de porcelaine, ainsi qu'une séparation des diverses sortes de verre, telles que le verre frontal et le verre de cône de tubes-images et le verre de tubes à décharge de gaz, s'effectuant dans des dispositifs de séparation (28, 48, 56, 40) correspondants, caractérisé en ce que les corps composites complets sont d'abord fragmentés en fragments de taille allant jusqu'à celle de la paume de la main, essentiellement sans perte de leurs propriétés superficielles; en ce qu'au moins la fraction des substances nocives, détachée et/ou libérée lors de la fragmentation des corps en verre est ensuite séparée des fragments de verre et des fractions résiduelles; en ce que le mélange constitué des fragments de verre et des fractions résiduelles est ensuite séparé des plus petits fragments; en ce que les métaux magnétiques sont ensuite triés; en ce que le verre frontal des tubes-images et/ou le verre des tubes à décharge de gaz sont ensuite séparés des fragments de verre; en ce que les métaux non magnétiques, s'ils sont présents, sont ensuite séparés; et en ce que les composants en verre résiduels, lorsqu'ils sont présents, sont enfin séparés des substances opaques, avec utilisation d'un séparateur (28) pour les métaux magnétiques, d'un séparateur de verre (40) pour le verre frontal des tubes-images et/ou le verre des tubes à décharge de gaz, d'un séparateur (48) pour métaux non magnétiques et/ou d'un séparateur de substances opaques (56), comportant respectivement au moins un élément émetteur et un élément récepteur pour lumière infrarouge, qui mettent à profit pour la sélection le pouvoir d'absorption, de transmission et/ou de réflexion des divers composants de type corps en verre, séparés de substances nocives.

2. Procédé selon la revendication 1, caractérisé en ce que le dispositif de séparation de substances nocives (16a, 16b, 160) comprend une chambre (16b) de séparation de substances nocives, dans laquelle des revêtements de substances nocives sont détachés par frottement les uns contre les autres des composants de type corps en verre fragmentés, en ce que la fraction des revêtements de substances nocives, détachée lors de la fragmentation et/ou du frottement des composants les uns contre les autres, est envoyée, par un conduit (18) à une première unité de filtration (20a), comportant un premier récipient collecteur (20b) y faisant suite, et/ou en ce que des gaz qui sont libérés lors de la fragmentation des corps en verre sont évacués par pompage du dispositif de fragmentation (160) et envoyés à un second récipient collecteur (200c).

3. Procédé selon la revendication 2, caractérisé en ce que les substances nocives détachées sont envoyées, au moyen d'une dépression, du dispositif de fragmentation (12, 120) et/ou de la chambre (16a, 16b, 160) de séparation de substances nocives à la première unité de filtration (20a), et/ou en ce que la séparation des substances nocives détachées, d'avec les composants résiduels, est facilitée par l'utilisation d'une première centrifugeuse (16b), avec mise à profit des poids spécifiques différents des substances nocives, par comparaison avec les composants résiduels, et/ou en ce que le détachement des revêtements de substances nocives des fragments de verre comprend l'utilisation d'une substance auxiliaire qui, après le détachement des substances nocives, conduit les substances nocives détachées, par un conduit, à la première unité de filtration, la substance auxiliaire, purifiée et séparée des substances nocives dans le première unité de filtration, étant renvoyée à la chambre de séparation des substances nocives, tandis que les substances nocives restent dans le premier récipient collecteur.

4. Procédé selon la revendication 3, caractérisé en ce que, comme substance auxiliaire, on utilise une substance auxiliaire inerte vis-à-vis des revêtements de substances nocives, telle qu'une substance solide non fluide telle que la cellulose, le sable ou similaire, un liquide inerte tel que l'eau, ou un gaz inerte tel que l'air.

5. Procédé selon la revendication 3 ou 4, caractérisé en ce que dans la chambre de séparation de substances nocives est installée au moins une première buse qui effectue une pulvérisation de la substance auxiliaire sur les composants de type corps en verre fragmentés et/ou la formation de tourbillons de substance auxiliaire pour faciliter le processus de séparation.

6. Procédé selon l'une des revendications 3 à 5, caractérisé en ce que les composants de type corps en verre fragmentés, après la libération des revêtements de substances nocives, effectuée par le contact avec la substance auxiliaire, sont à nouveau transportés hors de celle-ci, et/ou en ce que la substance auxiliaire, portant les revêtements de substances nocives détachés, est séparée de ceux-ci dans une seconde centrifugeuse, en raison de son poids spécifique différent de celui des fragments résiduels, et/ou en ce que la substance auxiliaire, accompagnée des revêtements de substances nocives détachés, est envoyée, au moyen d'une dépression, à la première unité de filtration.

7. Procédé selon l'une des revendications précédentes, caractérisé en ce que, dans le cas de la fragmentation de corps en verre contenant du mercure, le dispositif de fragmentation (120) est refroidi de manière qu'il n'y ait pratiquement pas de vapeur de mercure libérée, et/ou en ce que le dispositif de séparation de substances nocives (16a, 16b, 160) comprend un parcours thermique (160) dans lequel le mercure liquide est vaporisé, et la vapeur de mercure provenant du dispositif de fragmentation (120) et/ou du dispositif de séparation de substances nocives (160) est évacuée par pompage et envoyée, en passant par un condensateur de mercure, à un troisième récipient collecteur (200b).

8. Procédé selon l'une des revendications précédentes, caractérisé en ce que le dispositif de séparation de substances nocives comprend une chambre de séparation de mercure, dans laquelle le mercure est rendu inoffensif, à l'aide d'un additif fixant Hg, par salification, complexation et/ou adsorption, et est envoyé à une seconde unité de filtration, en ce que l'additif est séparé du mercure dans la seconde unité de filtration, et en ce que l'additif purifié est renvoyé à la chambre de séparation de mercure, tandis que le mercure est envoyé à un troisième récipient collecteur.

9. Procédé selon la revendication 8, caractérisé en ce que l'additif est pulvérisé sur les fragments de corps en verre au moyen d'au moins une seconde buse, et/ou en ce que les composants de type corps en verre fragmentés sont envoyés à travers l'additif, et/ou en ce que l'additif, accompagné de mercure, est séparé des fragments de corps en verre résiduels, au moyen d'une troisième centrifugeuse, en raison de son poids spécifique.

10. Procédé selon l'une des revendications précédentes, caractérisé en ce que le séparateur (28) pour métaux magnétiques comprend au moins un aimant, et/ou en ce que le séparateur pour métaux magnétiques et/ou le séparateur pour métaux non magnétiques utilise la charge électrostatique différente des composants de corps composites fragmentés, et/ou en ce que le séparateur pour métaux magnétiques (28) et/ou le séparateur (48) pour métaux non magnétiques comprend au moins un capteur de métaux et/ou en se qu'au moins un capteur de céramique est utilisé dans le séparateur de substances opaques (56).

11. Procédé selon l'une des revendications précédentes, caractérisé en ce que les bandes transporteuses (22, 34, 46, 54, 100, 140), qui permettent le transport entre les divers dispositifs séparateurs, sont munies de vibrateurs.

12. Procédé selon l'une des revendications précédentes, caractérisé en ce que les plus petits fragments formés lors de la fragmentation des corps composites sont séparés par tamisage des fragments résiduels et envoyés, dans chaque cas à l'aide d'une trémie (24, 36) ou similaire, à au moins un quatrième récipient collecteur (26, 38).

13. Procédé selon la revendication 12, caractérisé en ce que le tamisage s'effectue dans au moins un tambour à traverser, au moyen d'orifices de la paroi extérieure de ce dernier, et/ou en ce que le tamisage des plus petits fragments s'effectue pendant le transport, entre au moins deux dispositifs de séparation différents, au moyen de trous présents dans la bande transporteuse (22, 34) correspondante, vibrante, effectuant le transport.

14. Procédé selon l'une des revendications précédents, caractérisé en ce que le dispositif de fragmentation (12, 120) est constitué par un premier broyeur (12) pour tubes-images et/ou un second broyeur (120) pour tubes à décharge de gaz, le premier broyeur (12) et/ou le second broyeur (120) comprenant un déchiqueteur.

15. Procédé selon l'une des revendications précédentes, caractérisé en ce que, après la fragmentation des tubes à décharge de gaz ainsi que l'élimination de l'argent contenu dans ceux-ci, et la fragmentation des tubes-images, ou après la séparation des substances nocives, les composants résiduels des tubes-images et les composants résiduels des tubes à décharge de gaz sont soumis ensemble à la suite du traitement, le verre des tubes à décharge de gaz étant séparé conjointement avec le verre frontal des tubes-images.
